# EUROPÄISCHE PATENTSCHRIFT

(11) **EP 2 829 745 B1**
(45) Veröffentlichungstag und Bekanntmachung des Hinweises auf die Patenterteilung: **15.02.2017**
(21) Anmeldenummer: 14002223.7
(22) Anmeldetag: 30.06.2014
(51) Int. Cl.: F16B 7/18, A01K 31/16

(54) **Eckverbinder für einen Unterbaurahmen, insbesondere für die Aufnahme von Legenestern**
Corner connector for a substructure frame, in particular for holding laying nests
Raccord d'angle pour un cadre support, notamment pour la réception de pondoirs

(30) Priorität: 03.07.2013 DE 202013005956 U
(43) Veröffentlichungstag der Anmeldung: 28.01.2015
(73) Patentinhaber: Fienhage, Hans-Jürgen, 49424 Lutten (DE)
(72) Erfinder: Rensing, Frank, 49429 Visbek (DE); Fienhage, Hans-Jürgen, 49424 Lutten (DE)
(74) Vertreter: Heiland, Karsten

(56) Entgegenhaltungen:
- EP-A2- 0 842 601
- WO-A1-2012/016297
- FR-A1- 2 450 133

## Beschreibung

In einer Stallkonstruktion für die Haltung von Legehennen oder anderem Geflügel sind mehrere Legenester auf einem Unterbaurahmen angeordnet und gehalten. Der Unterbaurahmen weist zumindest Querträger, Längsträger und Stützbeine auf. Diese Bestandteile sollen mit möglichst wenig Aufwand winkeltreu zueinander montiert und miteinander verbunden werden.

Aus der EP 0 842 601 A2 ist eine Stallkonstruktion mit einem auf Stützbeinen stehenden Unterbaurahmen bekannt. Die Stützbeine sind an Längsträgern montiert.

In der WO 2012/016297 A1 sind Eckverbinder für Profilstücke mit quadratischem Querschnitt offenbart, siehe insbesondere Fig. 11 c, 11 d, 17a.

Aus der FR 2 450 133 A1 ist ein Eckverbinder mit einem abwärts gerichteten L-Profil bekannt.

Aufgabe der vorliegenden Erfindung ist die Schaffung eines Bauteils zur schnellen und winkeltreuen Verbindung von Querträger, Längsträger und Stützbein in einem Unterbaurahmen.

Zur Lösung der Aufgabe ist ein Eckverbinder mit den Merkmalen des Anspruchs 1 vorgesehen. Der Eckverbinder weist ein vertikales Profilstück auf, welches zumindest abschnittsweise als U-Profil ausgebildet ist, nämlich mit einer Basis und zwei Schenkeln. Das U-Profil ist zur Aufnahme des Stützbeins vorgesehen. Querträger und Längsträger können über vorgefertigte Bohrungen am Profilstück mit demselben verschraubt werden. Auch andere Befestigungsmittel zur Einhaltung definierter Winkel sind möglich, etwa zusätzliche Kanten oder Anschläge.

Nach einem weiteren Gedanken der Erfindung kann ein unterer Abschnitt des Profilstücks zusätzlich ein an einen der Schenkel anschließendes Profil aufweisen, insbesondere ein L-Profil, zur Bildung eines Gesamt-Profils mit mindestens drei das Stützbein umfassenden Profilwinkeln und mit einem Profil-Schenkel parallel vor der Basis des U-Profils. Einer der L-Profil-Schenkel kann parallel zu den Schenkeln des U-Profils verlaufen. Insgesamt ergibt sich eine rechteckige Aufnahme für das Stützbein. Die jeweiligen Abmessungen vom Außenquerschnitt des Stützbeins einerseits und vom Innenquerschnitt des durch U-Profil und L-Profil gebildeten, gegebenenfalls offenen Rechtecks andererseits, sind aneinander angepasst.

Erfindungsgemäß kann ein L-Profil-Schenkel von einem gegenüberliegenden Schenkel des U-Profils einen Abstand aufweisen, und insbesondere auswärts gerichtet sein. Nach dem Einstecken des Stützbeins in das derart gebildete teilweise offene Rechteckprofil werden die einander gegenüberliegenden Schenkel durch geeignete Mittel zusammengedrückt und klemmen so das Stützbein fest. Dadurch sind eine einfache Höhenjustierung einerseits und eine noch genauere winkeltreue Fixierung des Stützbeins andererseits möglich.

Vorteilhafterweise sind die einander gegenüberliegenden Schenkel - Schenkel des U-Profils und gegenüberliegender L-Profil-Schenkel - durch eine Schraubverbindung oder ein anderes Verbindungsmittel gegeneinander ziehbar oder fixierbar. Dadurch ergibt sich eine Klemmwirkung mit Reibschluss des Stützbeins im Profilstück. Zusätzlich können Stützbein und Profilstück zur Erzielung eines Formschlusses unmittelbar miteinander verschraubt werden.

Nach einem weiteren Gedanken der Erfindung kann ein insbesondere mittlerer Abschnitt des U-Profils mindestens eine Wange parallel zu einem Schenkel des U-Profils aufweisen, insbesondere in Fortsetzung dieses Schenkels. Die Wange liegt dann in der Ebene des Schenkels des U-Profils. An die Wange können ein oder mehrere Querträger oder Längsträger angelegt und fixiert werden. Hierzu kann die Wange winkeltreu angeordnete Bohrungen aufweisen.

Erfindungsgemäß kann die Wange eine obere Kante aufweisen, welche im Wesentlichen senkrecht zum U-Profil verläuft. Dabei kann die Kante wiederum als Anlage für Querträger oder Längsträger vorgesehen sein.

Erfindungsgemäß kann die Wange eine untere Kante aufweisen, welche schräg aufwärts, insbesondere bis zu einer Wangenspitze, verläuft. Die Wange ist insgesamt im Wesentlichen dreieckförmig ausgebildet und nimmt so die Kräfte anliegender oder aufliegender Querträger oder Längsträger gut auf.

Vorteilhafterweise sind zwei insbesondere parallele Wangen in Fortsetzung der beiden Schenkel des U-Profils vorgesehen. An beide Wangen können Querträger oder Längsträger angeschlagen oder angelegt werden.

Nach einem weiteren Gedanken der Erfindung weist die Wange (oder beide Wangen) Bohrungen zur Aufnahme von Bolzen, Schrauben oder Nieten auf, insbesondere als Reihe mit mehreren, parallel zu einer oberen Kante aufeinanderfolgenden Bohrungen. Die Reihe von Bohrungen erstreckt sich mit geringem Abstand zur Oberkante der Wange und zur Befestigung beispielsweise eines Querträgers.

Erfindungsgemäß kann ein insbesondere oberer Abschnitt des U-Profils zur Verbindung mit dem Längsträger vorgesehen sein, insbesondere mit Bohrungen in der Basis. Alternativ kann der obere Abschnitt zur Verbindung mit dem Querträger vorgesehen sein. Vorzugsweise sind in Längsrichtung des U-Profils aufeinanderfolgend mehrere Bohrungen vorgesehen.

Der Eckverbinder kann nicht nur die beschriebene Verbindung eines Querträgers mit einem Längsträger und einem Stützbein sicherstellen. Darüber hinaus kann der Eckverbinder zwei Längsträger miteinander und zwei Querträger miteinander verbinden. Die beiden Querträger können an die beiden Wangen angeschlagen werden. Für die Verbindung mit den beiden Längsträgern sind in der Basis des U-Profils insbesondere zwei Reihen von Bohrungen vorgesehen, wobei die Reihen parallel nebeneinander entlang der Basis des U-Profils verlaufen. Der Längsträger weist eine entsprechende Höhe über mindestens zwei bis drei der Bohrungen einer Bohrungsreihe auf.

Gegenstand der Erfindung ist auch ein Unterbaurahmen mit Querträgern, Längsträgern, Stützbeinen und erfindungsgemäßen Eckverbindern.

Schließlich ist ebenfalls Gegenstand der Erfindung eine Stallkonstruktion mit Legenestern und mit einem erfindungsgemäßen Unterbaurahmen.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine Stallkonstruktion mit Legenestern auf einem Unterbaurahmen,
- Fig. 2: das Detail A aus Fig. 1, nämlich einen Eckverbinder mit angeschraubten Teilen (Stützbein, Querträger, Längsträger),

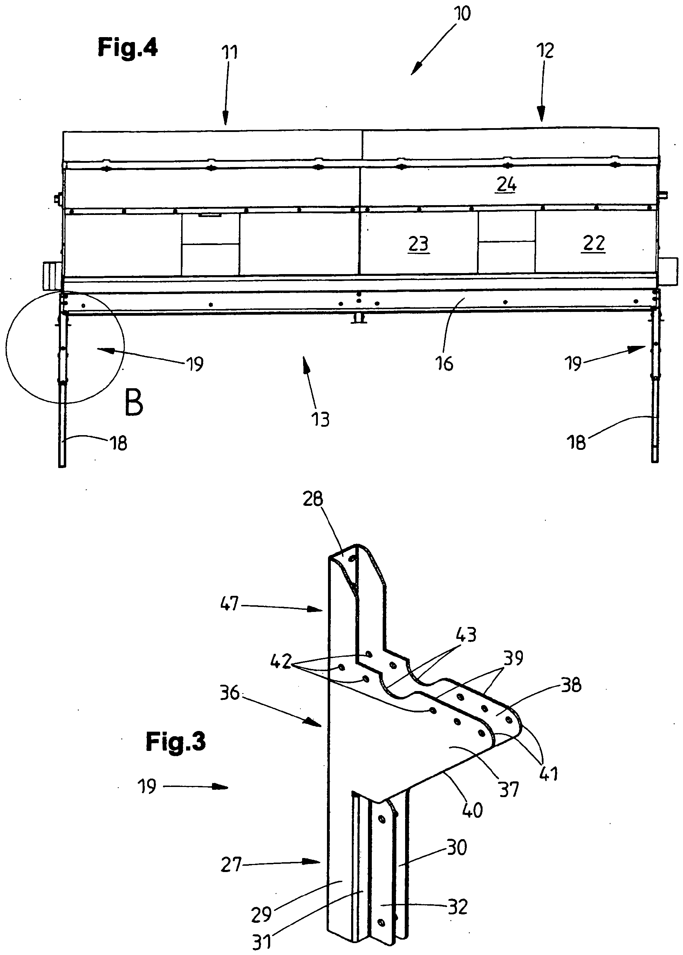

- Fig. 3: den Eckverbinder gemäß Fig. 2 allein,
- Fig. 4: die Stallkonstruktion gemäß Fig. 1 in einer Längsseitenansicht,
- Fig. 5: das Detail B aus Fig. 4,
- Fig. 6: einen Querschnitt durch Querträger und Stützbein entlang der Linie C-C in Fig. 5.

In einer Stallkonstruktion 10 sind zwei Legenester 11, 12 auf einem gemeinsamen Unterbaurahmen 13 angeordnet. Mittig durch die Legenester 11, 12 führen Förderbänder 14, 15, welche in einer Ebene parallel nebeneinander verlaufen.

Der Unterbaurahmen 13 ist hier gebildet aus Längsträgern 16, Querträgern 17, Stützbeinen 18 und Eckverbindern 19. Jedes Legenest 11, 12 weist zumindest im Bereich der Querträger 17 Giebelwandteile 20, 21 und im Bereich der Längsträger 16 Längsseitenwandteile 22, 23 auf. Schließlich ist die Konstruktion durch ein Satteldach mit Dachseiten 24, 25 abgedeckt. Zwischen den Dachseiten 24, 25 erstreckt sich ein First 26 parallel zu den Längsträgern 16.

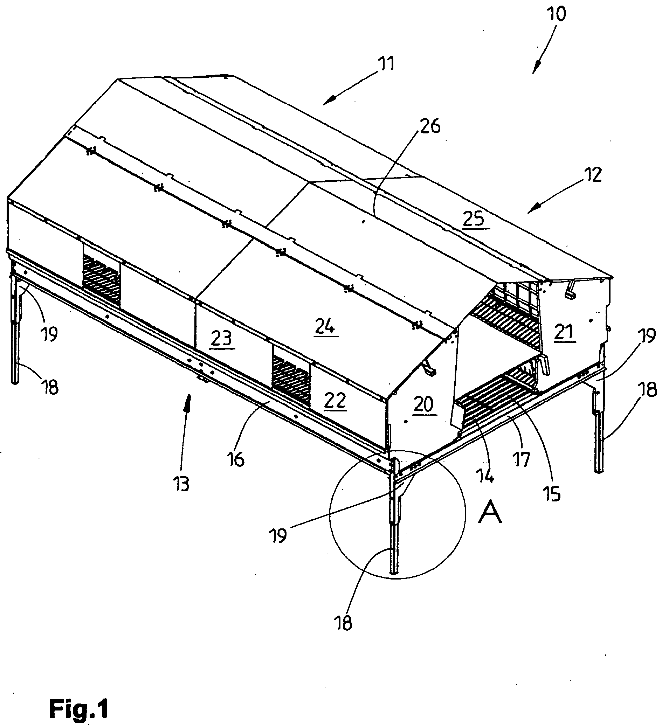

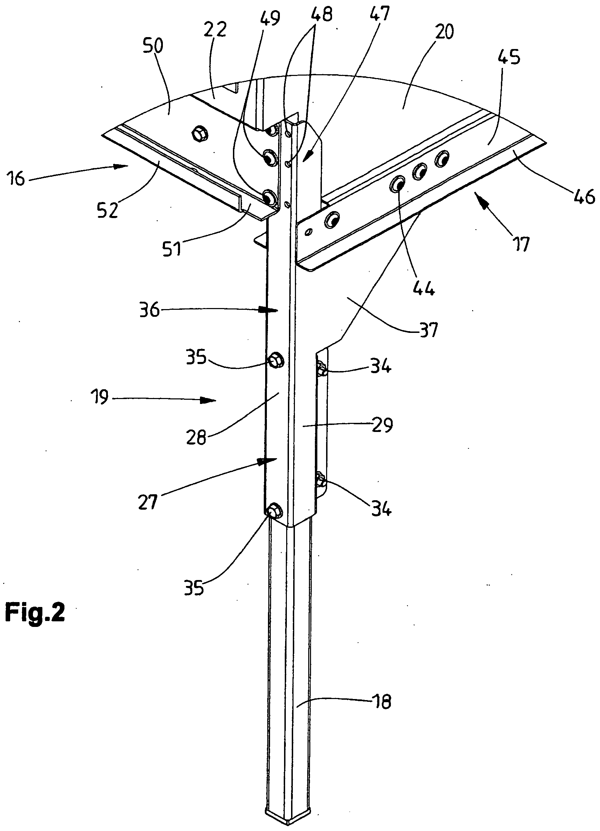

Fig. 2 zeigt das Detail A aus Fig. 1, nämlich den Eckverbinder 19 mit angrenzenden Teilen, nämlich Querträger 17, Längsträger 16 und Stützbein 18. Außerdem sichtbar sind Ecken des Giebelwandteils 20 und des Längsseitenwandteils 22.

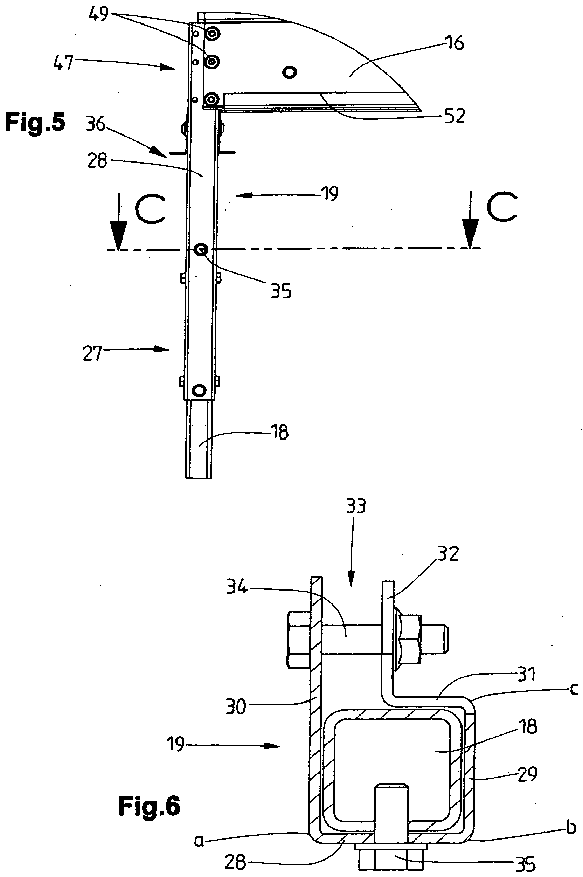

Der Eckverbinder 19 ist ein Profilstück, nach Art eines teilweise modifizierten, senkrecht angeordneten U-Profils. Ein unterer Abschnitt 27 dient im Wesentlichen der Aufnahme des Stützbeins 18 und ist hierzu in besonderer Weise gestaltet. An das U-Profil mit Basis 28 und Schenkeln 29, 30 schließt ein L-Profil mit Schenkeln 31, 32 an. Dabei erstreckt sich der Schenkel 31 parallel zur Basis 28, aber nicht über deren volle Breite. Dadurch ist eine deutliche Lücke 33 zwischen den Schenkeln 32, 30 gegeben. Der Schenkel 30 ist hier verlängert und endet etwa mit dem Schenkel 32, siehe Fig. 6. Zwischen den Schenkeln 28, 29, 30, 31 ist ein rechteckiger oder quadratischer Querschnitt mit drei Profilwinkeln a, b, c gebildet, in den das entsprechend geformte Stützbein 18 einschiebbar ist. Durch Zusammendrücken der Schenkel 30, 31 kann das Stützbein 18 in dem genannten rechteckigen Querschnitt festgeklemmt werden. Hierzu ist eine Schraubverbindung 34 von Schenkel 32 zu Schenkel 30 vorgesehen. Bei der Montage des Unterbaurahmens werden die Stützbeine 18 zunächst in den Eckverbindern festgeklemmt. Nach endgültigem Ausgleich von Bodenunebenheiten, werden die Stützbeine 18 in ihren Eckverbindern 19 mit je zwei gewindebohrenden Schrauben 35 gegen Hineinrutschen gesichert. Zumindest die Eckverbinder 19 weisen hierfür vorgefertigte Bohrungen auf. In die Stützbeine 18 können vor Ort korrespondierende Bohrungen eingebracht werden. Die Bohrungen in den Eckverbindern 19 wirken dabei als Führungen.

In einem mittleren Abschnitt 36 des Eckverbinders 19 sind die Schenkel 29, 30 zur Bildung von Wangen 37, 38 verlängert. Jede Wange 37, 38 weist eine quer zum Stützbein 18 verlaufende Oberkante 39 und eine schräg gerichtete Unterkante 40 auf, wobei Oberkante 39 und Unterkante 40 in einer gemeinsamen, abgerundeten Spitze 41 zusammenlaufen. Beide Wangen 39 verlaufen parallel zueinander und zum Schenkel 32.

Knapp unterhalb der Oberkante 39 ist jede Wange 37, 38 mit einer Reihe von Bohrungen 42 versehen. Außerdem ist entlang jeder Oberkante 39 eine halbkreisförmige Vertiefung 43 vorgesehen, beispielsweise zur Auflage längsgerichteter Rohre oder Stützstreben.

Die beiden Reihen von Bohrungen 42 dienen der Verschraubung mit je einem Querträger 17 an jeder Wange 37, 38, nämlich mittels gewindefurchender Schrauben 44. Aufgrund der mehreren aufeinanderfolgenden Bohrungen 42 an jeder Wange 37, 38 und korrespondierender Bohrungen an den Querträgern 17 reicht eine Verbindung mit den genannten gewindefurchenden Schrauben 44 oder analog wirkenden Verbindungsmitteln aus, um Querträger 17 und Eckverbinder 19 winkeltreu zueinander auszurichten. Ziel ist eine Anordnung der Querträgers 17 quer zum Stützbein 18 und zugleich quer zum Längsträger 16. Jeder Querträger 17 ist hier als L-Profil ausgebildet mit einem aufrechten größeren Schenkel 45 und einem waagerechten kleineren Schenkel 46.

Der Längsträger 16 ist an einem oberen Abschnitt 47 des Eckverbinders 19 angeschlagen. Hierzu weist der obere Abschnitt 47 im Bereich der Basis 28 zwei in Richtung des Stützbeins 18 verlaufende Reihen mit Bohrungen 48 auf. Der Längsträger 16 weist an seinem Ende korrespondierende Bohrungen auf, in die gewindefurchende Schrauben 49 eingesetzt sind, siehe Fig. 2. Auch hier ist durch Anordnung und Anzahl der Schraubverbindungen eine winkeltreue Ausrichtung bei der Montage gegeben.

Der Längsträger 16 ist grundsätzlich wie der Querträger 17 als L-Profil mit großem, aufrechten Schenkel 50 und waagerechtem, kleinen Schenkel 51 ausgebildet. Zusätzlich ist hier ein weiterer kleiner Schenkel 52 an dem kleinen Schenkel 51 vorgesehen und aufwärts gerichtet, ebenso wie der große Schenkel 50.

Der Eckverbinder 19 kann im U-Profil seines oberen Abschnitts 47 noch eine Stoßkante eines Giebelwandteils 20 aufnehmen, siehe Fig. 2, und so eine weitere Zentrierung und Ausrichtung der Teile gegeneinander bewirken. Außerdem kann das betreffende Giebelwandteil 20 mit seiner Unterkante auf dem Querträger 17 und/oder der Oberkante 39 einer der Wangen 37, 38 aufliegen. Analog gilt dies für die Anordnung des Längsseitenwandteils 22 auf dem Längsträger 16.

Die Stallkonstruktion 10 gemäß Fig. 1 erstreckt sich über eine Länge von etwa 2,40 m. Mehrere dieser Einheiten können in Richtung der Längsträger 16 hintereinander angeordnet und miteinander verbunden sein. Insbesondere ist dann im Bereich des Übergangs zwischen den Einheiten auf jeder Seite nur ein Eckverbinder 19 vorgesehen.

### Bezugszeichenliste:

| | | | |
|---|---|---|---|
| 10 | Stallkonstruktion | 35 | Schraube |
| 11 | Legenest | 36 | mittlerer Abschnitt |
| 12 | Legenest | 37 | Wange |
| 13 | Unterbaurahmen | 38 | Wange |
| 14 | Förderband | 39 | Oberkante |
| 15 | Förderband | 40 | Unterkante |
| 16 | Längsträger | 41 | Spitze |
| 17 | Querträger | 42 | Bohrungen |
| 18 | Stützbeine | 43 | Vertiefung |
| 19 | Eckverbinder | 44 | Schrauben |
| 20 | Giebelwandteile | 45 | großer Schenkel |
| 21 | Giebelwandteile | 46 | kleiner Schenkel |
| 22 | Längsseitenwandteile | 47 | oberer Abschnitt |
| 23 | Längsseitenwandteile | 48 | Bohrungen |
| 24 | Dachseite | 49 | Schrauben |
| 25 | Dachseite | 50 | großer Schenkel |
| 26 | First | 51 | kleiner Schenkel |
| 27 | unterer Abschnitt | 52 | kleiner Schenkel |
| 28 | Basis | a | Profilwinkel |
| 29 | Schenkel | b | Profilwinkel |
| 30 | Schenkel | c | Profilwinkel |
| 31 | Schenkel | | |
| 32 | Schenkel | | |
| 33 | Lücke | | |
| 34 | Schraubverbindung | | |

## Patentansprüche

1. Eckverbinder (19) für einen Unterbaurahmen (13), insbesondere für die Aufnahme von Legenestern (11, 12), zur Verbindung mit einem Querträger (17), einem Längsträger (16) und einem Stützbein (18), mit einem vertikalen Profilstück, welches zumindest abschnittsweise als U-Profil ausgebildet ist, nämlich mit einer Basis (28) und zwei Schenkeln (29, 30), wobei ein unterer Abschnitt (27) des Profilstücks zusätzlich ein an den einen Schenkel (29) anschließendes Profil (31, 32) aufweist, zur Bildung eines Gesamt-Profils mit mindestens drei das Stützbein (18) umfassenden Profilwinkeln und mit einem Profil-Schenkel (31) parallel vor der Basis (28).

2. Eckverbinder nach Anspruch 1, **dadurch gekennzeichnet, dass** das zusätzlich an den Schenkel (29) anschließende Profil ein L-Profil ist.

3. Eckverbinder nach Anspruch 2, **dadurch gekennzeichnet, dass** ein L-Profil-Schenkel (32) von einem gegenüberliegenden Schenkel (30) des U-Profils einen Abstand (Lücke 33) aufweist.

4. Eckverbinder nach Anspruch 2 oder 3, **dadurch gekennzeichnet, dass** ein Schenkel (30) des U-Profils und ein gegenüberliegender L-Profil-Schenkel (32) durch eine Schraubverbindung (34) oder ein anderes Verbindungsmittel gegeneinander ziehbar oder fixierbar sind.

5. Eckverbinder nach Anspruch 1 oder einem der weiteren Ansprüche, **dadurch gekennzeichnet, dass** ein insbesondere mittlerer Abschnitt (36) des U-Profils mindestens eine Wange (37, 38) parallel zu einem Schenkel (30, 29) aufweist, insbesondere in Fortsetzung dieses Schenkels.

6. Eckverbinder nach Anspruch 5, **dadurch gekennzeichnet, dass** die Wange (37, 38) eine Oberkante (39) aufweist, die im Wesentlichen senkrecht zum U-Profil bzw. zum Stützbein (18) verläuft.

7. Eckverbinder nach Anspruch 5 oder 6, **dadurch gekennzeichnet, dass** die Wange (37, 38) eine Unterkante (40) aufweist, welche schräg aufwärts, insbesondere bis zu einer Wangenspitze (41) verläuft.

8. Eckverbinder nach Anspruch 5 oder einem der weiteren Ansprüche, **dadurch gekennzeichnet, dass** zwei insbesondere parallele Wangen (37, 38) in Fortsetzung der Schenkel (29, 30) des U-Profils vorgesehen sind.

9. Eckverbinder nach Anspruch 5 oder einem der weiteren Ansprüche, **dadurch gekennzeichnet, dass** die Wange (37, 38) Bohrungen (42) zur Aufnahme von Bolzen, Schrauben oder Nieten aufweist, insbesondere mehrere, parallel zu einer Oberkante (39) aufeinanderfolgende Bohrungen.

10. Eckverbinder nach Anspruch 1 oder einem der weiteren Ansprüche, **dadurch gekennzeichnet, dass** ein insbesondere oberer Abschnitt (47) des U-Profils zur Verbindung mit dem Längsträger (16) vorgesehen ist, insbesondere mit Bohrungen (48) in der Basis (28).

11. Unterbaurahmen (13) mit Querträgem (17), Längsträgern (16), Stützbeinen (18) und mit Eckverbindern (19) nach einem der vorstehenden Ansprüche zur Verbindung mit einem Querträger (17), einem Längsträger (16) und einem Stützbein (18), wobei ein vertikales Profilstück des Eckverbinders (19) zumindest abschnittsweise als U-Profil ausgebildet ist, nämlich mit einer Basis (28) und zwei Schenkeln (29, 30) und wobei ein unterer Abschnitt (27) des Eckverbinders (19) im Wesentlichen der Aufnahme des Stützbeins (18) dient.

12. Stallkonstruktion (10) mit Legenestern (11, 12) und mit einem Unterbaurahmen (13) nach Anspruch 11.

## Claims

1. Corner connector (19) for a substructure frame (13), in particular for accommodating laying nests (11, 12), for connection to a crossmember (17), to a longitudinal member (16) and to a supporting leg (18), having a vertical profile piece which is designed, at least in parts, in the form of a U profile, that is to say with a base (28) and two limbs (29, 30), wherein a lower portion (27) of the profile piece has, in addition, a profile (31, 32) which adjoins the one limb (29), for the purpose of forming an overall profile having at least three angled profiles encompassing the supporting leg (18) and having a profile limb (31) parallel to, and in front of, the base (28).

2. Corner connector according to Claim 1, **characterized in that** the profile which additionally adjoins the limb (29) is an L profile.

3. Corner connector according to Claim 2, **characterized in that** one L-profile limb (32) is at a distance (gap 33) from an opposite limb (30) of the U profile.

4. Corner connector according to Claim 2 or 3, **characterized in that** one limb (30) of the U profile and an opposite L-profile limb (32) can be drawn, or fixed, against one another by a screw connection (34) or some other connecting means.

5. Corner connector according to Claim 1 or one of the further claims, **characterized in that** an in particular central portion (36) of the U profile has at least one side piece (37, 38) parallel to a limb (30, 29), in particular in extension of said limb.

6. Corner connector according to Claim 5, **characterized in that** the side piece (37, 38) has an upper edge (39), which runs essentially perpendicularly to the U profile and/or to the supporting leg (18).

7. Corner connector according to Claim 5 or 6, **characterized in that** the side piece (37, 38) has a lower edge (40), which runs obliquely upwards, in particular as far as a side-piece tip (41).

8. Corner connector according to Claim 5 or one of the further claims, **characterized in that** two in particular parallel side pieces (37, 38) are provided in extension of the limbs (29, 30) of the U profile.

9. Corner connector according to Claim 5 or one of the further claims, **characterized in that** the side piece (37, 38) has bores (42) for accommodating bolts, screws or rivets, in particular a plurality of bores following one after the other parallel to an upper edge (39).

10. Corner connector according to Claim 1 or one of the further claims, **characterized in that** an in particular upper portion (47) of the U profile is provided for connection to the longitudinal member (16), and in particular has bores (48) in the base (28).

11. Substructure frame (13) having crossmembers (17), longitudinal members (16), supporting legs (18) and having corner connectors (19) according to one of the preceding claims for connection to a crossmember (17), to a longitudinal member (16) and to a supporting leg (18), wherein a vertical profile piece of the corner connector (19) is designed, at least in part, in the form of a U profile, that is to say with a base (28) and two limbs (29, 30), and wherein a lower portion (27) of the corner connector (19) serves essentially for accommodating the supporting leg (18).

12. Barn structure (10) with laying nests (11, 12) and with a substructure frame (13) according to Claim 11.

## Revendications

1. Raccord d'angle (19) pour un cadre de support (13) en particulier pour recevoir des pondoirs (11, 12), destiné à être connecté à une traverse (17), un longeron (16) et un pied (18), avec une pièce profilée verticale qui est réalisée au moins en partie sous forme de profilé en U, à savoir avec une base (28) et deux branches (29, 30), une portion inférieure (27) de la pièce profilée présentant en outre un profilé (31, 32) se raccordant à l'une des branches (29) pour former un profilé d'ensemble avec au moins trois angles de profilé comprenant le pied (18) et avec une branche profilée (31) parallèle à la base (28).

2. Raccord d'angle selon la revendication 1, **caractérisé en ce que** le profilé se raccordant en outre à la branche (29) est un profilé en L.

3. Raccord d'angle selon la revendication 2, **caractérisé en ce qu'**une branche (32) du profilé en L présente un espacement (espace 33) par rapport à la branche (30) opposée du profilé en U.

4. Raccord d'angle selon la revendication 2 ou 3, **caractérisé en ce qu'**une branche (30) du profilé en U et une branche du profilé en L opposée (32) peuvent être vissées l'une contre l'autre ou fixées l'une contre l'autre par une connexion vissée (34) ou un autre moyen de connexion.

5. Raccord d'angle selon la revendication 1 ou selon l'une quelconque des autres revendications, **caractérisé en ce qu'**une portion notamment centrale (36) du profilé en U présente au moins une joue (37, 38) parallèle à une branche (30, 29), en particulier dans le prolongement de cette branche.

6. Raccord d'angle selon la revendication 5, **caractérisé en ce que** la joue (37, 38) présente une arête supérieure (39) qui s'étend essentiellement perpendiculairement au profilé en U ou au pied (18).

7. Raccord d'angle selon la revendication 5 ou 6, **caractérisé en ce que** la joue (37, 38) présente une arête inférieure (40) qui s'étend obliquement vers le haut, en particulier jusqu'à une pointe de joue (41).

8. Raccord d'angle selon la revendication 5 ou selon l'une quelconque des autres revendications, **caractérisé en ce que** deux joues notamment parallèles (37, 38) sont prévues dans le prolongement des branches (29, 30) du profilé en U.

9. Raccord d'angle selon la revendication 5, ou selon l'une quelconque des autres revendications, **caractérisé en ce que** la joue (37, 38) présente des alésages (42) pour recevoir des boulons, des vis ou des rivets, en particulier plusieurs alésages successifs parallèles à une arête supérieure (39).

10. Raccord d'angle selon la revendication 1 ou selon l'une quelconque des autres revendications, **caractérisé en ce qu'**une portion notamment supérieure (47) du profilé en U est prévue pour être connectée au longeron (16), en particulier avec des alésages (48) dans la base (28).

11. Cadre de support (13) avec des traverses (17), des longerons (16), des pieds (18) et des raccords d'angle (19) selon l'une quelconque des revendications précédentes, pour la connexion à une traverse (17), un longeron (16) et un pied (18), une pièce profilée verticale du raccord d'angle (19) étant réalisée au moins en partie sous forme de profilé en U, à savoir avec une base (28) et deux branches (29, 30) et une portion inférieure (27) du raccord d'angle (19) servant essentiellement à recevoir le pied (18).

12. Construction de stalles (10) avec des pondoirs (11, 12) et un cadre de support (13) selon la revendication 11.
